# EUROPEAN PATENT APPLICATION

(11) **EP 4 631 666 A1**
(43) Date of publication of application: **15.10.2025**
(21) Application number: 25165580.9
(22) Date of filing: 24.03.2025
(51) Int. Cl.: B23K 26/20, H01M 50/103, H01M 50/15, H01M 50/169

(54) **SQUARE BATTERY**

(30) Priority: 12.04.2024 JP 2024064319
(71) Applicant: Prime Planet Energy & Solutions, Inc., Chuo-ku, Tokyo 103-0022 (JP)
(72) Inventor: MIYAMURA, Yukinobu, Tokyo 103-0022 (JP); WAKIMOTO, Ryoichi, Tokyo 103-0022 (JP)
(74) Representative: Kuhnen & Wacker Patent- und Rechtsanwaltsbüro PartG mbB

(57) **Abstract**

Provided is a square battery 100 that includes a battery case 10 and an electrode assembly 20 housed in the battery case 10. The battery case 10 includes a case body 12 having a rectangular prism shape with openings 13 at both ends thereof and sealing plates 14 that seal the openings 13. The sealing plate 14 has a cover portion 14a that covers an edge 13a of the opening of the case body 12 and an inserting portion 14b inserted into the interior of the case body 12 from the cover portion 14a along the inside of the case body 12. The cover portion 14a and the case body 12 are welded together along the edge 13a of the opening of the battery case 10.

## Description

### BACKGROUND OF THE DISCLOSURE

### 1. Technical Field

The present disclosure relates to a square battery.

### 2. Background

Japanese Patent Publication No. 5504007 and Japanese Patent Publication No. 6640467 each describe a square battery in which a battery lid and a battery container are welded together by fillet welding.

Japanese Patent Publication No. 7355235 describes a square battery in which a space is provided between a cup-shaped exterior member and a lid-shaped exterior member. According to this publication, by providing the space, irradiation heat of a laser can be transferred to an electrode assembly located inside an exterior body during welding of the cup-shaped exterior member and the lid-shaped exterior member, thereby mitigating thermal damage to the electrode assembly.

### SUMMARY OF THE INVENTION

It is a main object of the present disclosure to provide a square battery that prevents laser penetration into the interior of the battery during laser welding.

A square battery disclosed herein includes: a battery case; and an electrode assembly housed in the battery case. The battery case includes a case body having a rectangular prism shape with openings at both ends thereof and a sealing plate that seals the opening. The sealing plate has a cover portion that covers an edge of the opening of the battery case and an inserting portion inserted into an interior of the case body along an inside of the opening of the case body. The cover portion and the case body are welded together along the edge of the opening of the battery case.

### BRIEF DESCRIPTION OF THE DRAWINGS

FIG. 1 is a schematic perspective view of a square battery 100.
FIG. 2 is a schematic cross-sectional view of a portion of the square battery 100.
FIG. 3 is a side view of a sealing plate 14.
FIG. 4 is a schematic diagram illustrating a configuration of an electrode assembly 20 housed in a battery case 10.
FIG. 5 is a cross-sectional view schematically illustrating a welding method according to one embodiment.
FIG. 6 is a cross-sectional view schematically illustrating a molten portion 11a at a side portion of an edge 13a of an opening 13 of a case body 12.
FIG. 7 is a cross-sectional view schematically illustrating the molten portion 11a at a corner 11 of the edge 13a of the opening 13 of the case body 12.
FIG. 8 is a cross-sectional view schematically illustrating a preferred form of the molten portion 11a at the corner 11.

### DETAILED DESCRIPTION OF THE PREFERRED EMBODIMENTS

Hereinafter, preferred embodiments of the technology disclosed herein will be described. Matters other than those specifically mentioned in the present specification that are necessary for implementing the technology disclosed herein may be understood as design matters of those skilled in the art based on the conventional technology in the field. The technology disclosed herein can be implemented based on the contents disclosed in the present specification and the technical common knowledge in the field. **In** the following drawings described in the present specification, members and parts that have the same actions are described with the same symbols, and redundant explanations thereof may be omitted or simplified. The dimensional relationships (length, width, thickness, etc.) in each drawing do not necessarily reflect the actual dimensional relationships.

The term "secondary battery" as used in the present specification refers to general electricity storage devices that can be repeatedly charged and discharged through the transfer of charge carriers between a positive electrode and a negative electrode, and it is a concept that encompasses so-called storage batteries (chemical batteries) such as lithium-ion secondary batteries and sodium-ion secondary batteries, and capacitors (physical batteries) such as lithium-ion capacitors (LIC). The following is a description of each of the main constituent materials of the secondary battery according to the present disclosure. For the constituent materials of the secondary battery not described here, conventionally known materials can be used.

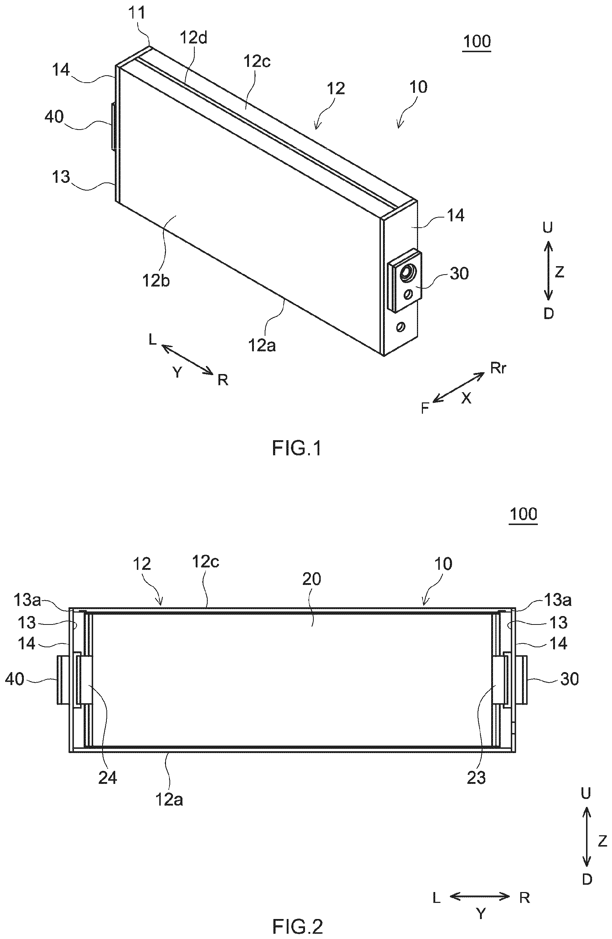

FIG. 1 is a schematic perspective view of a square battery 100. Although not illustrated in the drawing, a shrink film made of resin may be attached around a battery case 10 as an insulating material. FIG. 2 is a schematic cross-sectional view of a portion of the square battery 100. The square battery 100 includes the battery case 10 and an electrode assembly 20 housed in the interior of the battery case 10. A positive electrode terminal 30 is electrically connected to a positive electrode 22 of the electrode assembly 20 via a positive electrode current collector portion (not illustrated) inside the battery case 10. A negative electrode terminal 40 is electrically connected to a negative electrode 24 of the electrode assembly 20 via a negative electrode current collector portion (not illustrated) inside the battery case 10. Although not illustrated in the drawing, the square battery 100 here further includes an electrolyte housed in the interior of the battery case 10. Each component will be described in turn below.

### 1. Battery case 10

As illustrated in FIG. 1, the battery case 10 includes a case body 12 having openings 13 at both ends thereof, with one opening at each end, and sealing plates 14 that seal the openings 13. The battery case 10 is integrated by welding the sealing plates 14 to and along edges 13a of the respective openings 13 in the case body 12. A portion located at the corner of the sealing plate 14 becomes a corner 11 of the battery case 10. The battery case 10 is hermetically sealed (made airtight).

The case body 12 has a rectangular prism shape with the openings 13 at both ends thereof. The material of the case body 12 may be the same as that conventionally used and is not particularly limited. The case body 12 is preferably made of metal, for example, more preferably aluminum, an aluminum alloy, iron, an iron alloy, etc.

### 1-1. Case Body 12

The case body 12 has a rectangular prism shape with the openings 13 at both ends thereof. In the form illustrated in FIG. 1, the case body 12 has a bottom surface 12a with a substantially rectangular shape, a pair of long side surfaces 12b extending from long sides of the bottom surface 12a and opposed to each other, and a top surface 12c connecting upper end portions of the pair of long side surfaces 12b. The top surface 12c has a substantially rectangular shape. The top surface 12c is opposed to the bottom surface 12a. The case body 12 is formed by, for example, bending a single metal plate into a prism shape and joining seams (e.g., by welding). Here, a weld joint 12d is located on the top surface 12c.

### 1-2. Sealing Plate 14

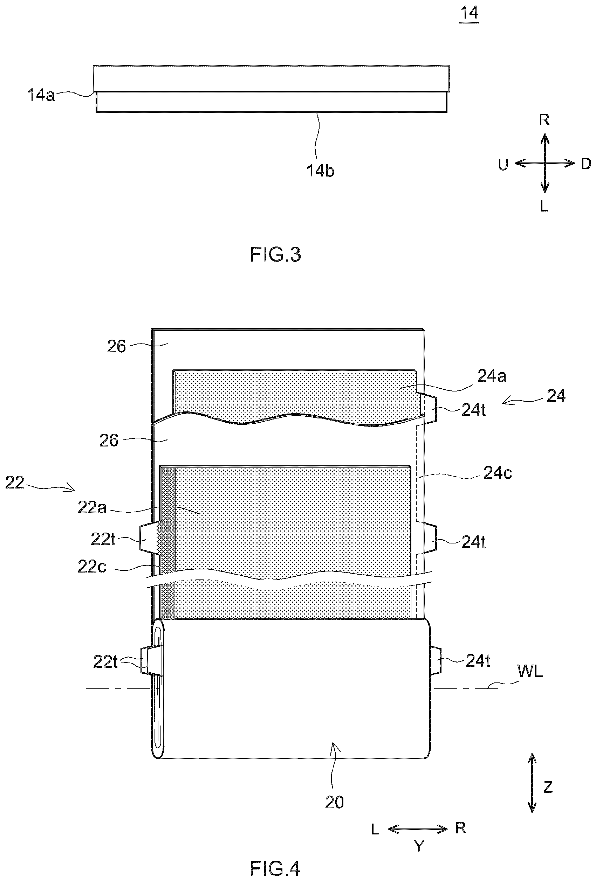

FIG. 3 is a side view of the sealing plate 14. As illustrated in FIG. 3, the sealing plate 14 is a member that seals the opening 13. In the present embodiment, the sealing plate 14 is a plate-shaped member that covers the entire opening 13 of the case body 12. The sealing plate 14 has a cover portion 14a and an inserting portion 14b. The cover portion 14a is a portion of the sealing plate 14 that covers the edge 13a of the opening 13 of the case body 12. The inserting portion 14b is a portion of the sealing plate 14 that is inserted into the interior of the case body 12 along the inside of the opening 13 of the case body 12.

### 2. Electrode Assembly 20

FIG. 4 is a schematic diagram illustrating a configuration of the electrode assembly 20 housed in the battery case 10. The electrode assembly 20 is an electric power generating element of the square battery 100. As illustrated in FIG. 4, the electrode assembly 20 includes the positive electrode 22, the negative electrode 24, and a separator 26. The electrode assembly 20 illustrated in FIG. 4 is a wound electrode assembly. This wound electrode assembly is fabricated by stacking the positive electrode 22, the negative electrode 24, and the separator 26 to form a long strip-shaped stacked body and then winding the stacked body around a winding axis WL. However, the structure of the electrode assembly 20 is not particularly limited, and it may be any other conventionally known structure (such as a stacked electrode assembly).

As illustrated in FIG. 4, the positive electrode 22 has a positive electrode core 22c and a positive electrode active material layer 22a formed on at least one surface (here, both surfaces) of the positive electrode core 22c.

The positive electrode core 22c has a strip shape. The positive electrode core 22c is made of conductive metal, such as aluminum, an aluminum alloy, nickel, and stainless steel. The positive electrode core 22c is here a metal foil, specifically an aluminum foil.

The positive electrode active material layer 22a is provided in a strip shape along the longitudinal direction of the strip-shaped positive electrode core 22c, as illustrated in FIG. 4. The positive electrode active material layer 22a contains a positive electrode active material that can reversibly absorb and release charge carriers. The positive electrode active material preferably contains at least one of Ni, Co, and Mn, and for example, lithium transition metal composite oxides such as a lithium nickel cobalt manganese composite oxide can be used. When the total solid content of the positive electrode active material layer 22a is 100 mass%, the content of the positive electrode active material may be generally 80 mass% or more, typically 90 mass% or more, for example 95 mass% or more. The positive electrode active material layer 22a may also contain optional components, such as a conductive material, a binder, and various additives, in addition to the positive electrode active material. As the conductive material, a carbon material such as carbon black (e.g., acetylene black (AB)) may be used. As the binder, PVdF, for example, can be used.

As illustrated in FIG. 4, plural positive electrode tabs 22t protrude from the end of the electrode assembly 20 in a long side direction Y. The positive electrode tabs 22t are spaced apart along the longitudinal direction of the strip-shaped positive electrode 22. The shape of the tab is rectangular here, but can have various other shapes (e.g., a trapezoidal shape). At least a portion of the positive electrode tab 22t has a region where the positive electrode active material layer 22a is not formed while the positive electrode core 22c is exposed.

As illustrated in FIG. 4, the negative electrode 24 has a negative electrode core 24c and a negative electrode active material layer 24a formed on at least one surface (here, both surfaces) of the negative electrode core 24c.

The negative electrode core 24c has a strip shape. The negative electrode core 24c is made of conductive metal, such as copper, a copper alloy, nickel, and stainless steel. The negative electrode core 24c is here a metal foil, specifically a copper foil.

The negative electrode active material layer 24a is provided in a strip shape along the longitudinal direction of the strip-shaped negative electrode core 24c. The negative electrode active material layer 24a contains a negative electrode active material that can reversibly absorb and release charge carriers (e.g., carbon material such as graphite and silicon materials such as Si and SiO). When the total solid content of the negative electrode active material layer 24a is 100 mass%, the content of the negative electrode active material may be generally 80 mass% or more, typically 90 mass% or more, for example 95 mass% or more. The negative electrode active material layer 24a may also contain optional components, such as a binder, a dispersant, and various additive components, in addition to the negative electrode active material. As the binder, rubbers such as a styrene butadiene rubber (SBR), for example, can be used. As the dispersant, celluloses, such as carboxymethylcellulose (CMC), for example, can be used.

As illustrated in FIG. 4, plural negative electrode tabs 24t protrude from the other end of the electrode assembly 20 in the long side direction Y. The negative electrode tabs 24t are spaced apart along the longitudinal direction of the strip-shaped negative electrode 24. The shape of the tab is rectangular here, but can have various other shapes (e.g., the trapezoidal shape). At least a portion of the negative electrode tab 24t has a region where the negative electrode active material layer 24a is not formed while the negative electrode core 24c is exposed.

The separator 26 is a member that insulates the positive electrode active material layer 22a of the positive electrode 22 from the negative electrode active material layer 24a of the negative electrode 24. A porous resin sheet made of, for example, polyolefin-based resin such as polyethylene (PE) or polypropylene (PP) is suitable for the separator 26. The separator 26 may be provided with a heat resistance layer (HRL) including an inorganic filler, on the surface of the resin sheet. As the inorganic filler, for example, alumina, boehmite, aluminum hydroxide, titania, or the like can be used. An adhesive layer is preferably provided on one or both surfaces of the separator 26. The adhesive layer improves adhesion to the positive electrode active material layer or negative electrode active material layer with which the adhesive layer is in contact. The adhesive layer contains polyvinylidene fluoride (PVdF), for example, as an adhesive component. The adhesive layer can also contain inorganic particles made of alumina, boehmite, etc. The adhesive layer may be provided on the surface of the resin sheet or on the surface of the HRL.

As illustrated in FIG. 1, the positive electrode terminal 30 and the negative electrode terminal 40 are each fixed to the battery case 10. Here, the positive electrode terminal 30 and the negative electrode terminal 40 are fixed to respective opposed surfaces of the battery case 10 (specifically, the respective sealing plates 14) and exposed at respective outer surfaces of the battery case 10. In detail, the positive electrode terminal 30 is attached to the sealing plate 14 disposed on one side in the long side direction Y (on the right side in FIGS. 1 and 2). The negative electrode terminal 40 is attached to the sealing plate 14 disposed on the other side in the long side direction Y (on the left side in FIGS. 1 and 2). Although the positive electrode terminal 30 and the negative electrode terminal 40 are attached to the respective sealing plates 14 in the battery case 10 according to one embodiment, the positive electrode terminal 30 and the negative electrode terminal 40 may be attached to the case body 12.

The positive electrode terminal 30 and the negative electrode terminal 40 are here disposed on an axis that extends in the long side direction Y and passes through the center of the sealing plate 14. However, the axis may be displaced from the center of the sealing plate 14, for example, in the short side direction X. The positive electrode terminal 30 and the negative electrode terminal 40 may not be disposed on the axis. For example, one of the positive electrode terminal 30 and the negative electrode terminal 40 may be displaced toward one side in the short side direction X, and the other electrode terminal toward the other side in the short side direction X.

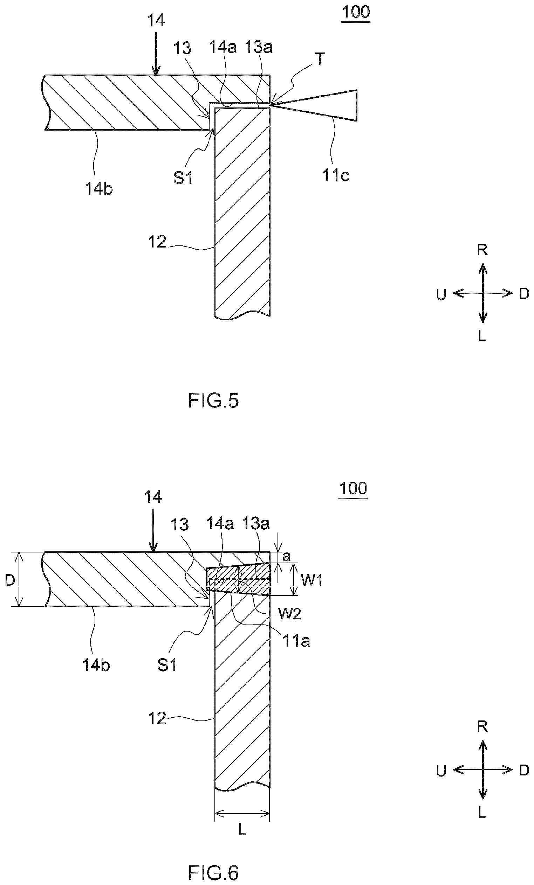

FIG. 5 is a cross-sectional view schematically illustrating a welding method according to one embodiment. FIG. 5 illustrates a diagram in which the sealing plate 14 is mounted onto the case body 12 with the opening 13 of the case body 12 facing upward. The cover portion 14a in the sealing plate 14 is welded to the case body 12 along the edge 13a of the opening 13 of the case body 12.

A manufacturing method for the square battery 100 here includes a mounting step and a welding step as illustrated in FIG. 5.

The mounting step is a step of mounting the sealing plate 14 onto the opening 13 of the case body 12 such that the cover portion 14a covers the edge 13a of the opening 13 of the case body 12 and the inserting portion 14b is inserted into the interior of the case body 12. During mounting, a gap is created between the opening 13 of the case body 12 and the inserting portion 14b of the sealing plate 14, corresponding to a difference between an inner diameter of the opening 13 and an outer diameter of the inserting portion 14b. In the present specification, the gap at a side portion of the edge 13a of the opening 13 of the case body 12 is referred to as S1, while the gap at the corner 11 is referred to as S2. Since FIG. 5 is a cross-sectional view of the side portion of the edge 13a of the opening 13 of the case body 12, the above gap in this drawing is S1.

In the welding step, in order to suitably weld the sealing plates 14 and the case body 12, welding is performed while they are being pressed by a holding jig. Specifically, the case body 12 and the sealing plate 14 are welded together by irradiation with the laser 11c over the entire periphery of the opening 13 of the case body 12 at a boundary between the edge 13a of the opening 13 of the case body 12 and the cover portion 14a of the sealing plate 14 opposed to the edge 13a of the opening 13.

In the manufacturing method for the square battery 100 according to the one embodiment, the case body 12 and the sealing plate 14 are welded together by the laser irradiation described above, so that welding heat generated from the molten portion 11a can be suitably diffused through the gap S1 or S2 during welding. In this manufacturing method, the irradiation with the laser 11c is applied over the entire periphery of the boundary between the edge 13a of the opening 13 of the case body 12 and the cover portion 14a of the sealing plate 14, whereby the corner 11 receives more energy of the laser 11c than the side portion of the edge does. Therefore, it is preferable to set S2 at the corner 11 of the edge 13a of the opening 13 of the case body 12 to be larger than S1 at the side portion of the edge 13a of the opening 13 of the case body 12.

After completing the welding step, when a thickness D of the sealing plate 14 is set to 1, the strength of the battery case 10 may be reduced if the gap S1 or S2 exists within a depth of 0.5 from the surface of the sealing plate 14. Therefore, from the viewpoint of suppressing a reduction in the strength of the battery case 10 that is caused by the gap S1 or S2, the gap S1 or S2 preferably exists within a region of 0.6 or more in thickness from the surface of the sealing plate 14, more preferably 0.7 or more, and even more preferably 0.8 or more.

Here, in the welding step, the sealing plate 14 may be irradiated with the laser 11c, for example, from a direction perpendicular to a thickness D direction of the sealing plate 14, as illustrated in FIG. 5. Also in this case, the inserting portion 14b is still inserted into the interior of the case body 12. When pressing the sealing plate 14 and the case body 12 during the welding described above, a gap T may be created at the boundary between the edge 13a of the opening 13 and the cover portion 14a of the sealing plate 14 opposed thereto due to a pressing failure. However, even when the laser 11c enters this gap T during the welding, the laser 11c hits the inserting portion 14b. Thus, the laser 11c is prevented from penetrating a space where the electrode assembly 20 in the case body 12 is housed. As a result, damage to the electrode assembly 20, which would otherwise be caused by the laser penetration, can be prevented. Note that from the viewpoint of suitably preventing the laser 11c from entering the interior of the battery case 10, the narrower the gap between the inserting portion 14b and the opening 13 of the battery case 10, i.e., the width of the gap S1 in a direction perpendicular to the thickness D direction of the sealing plate 14 (in a direction parallel to the direction in which the laser 11c travels), the better it is. Therefore, the inserting portion 14b and the opening 13 of the battery case 10 may be in contact with each other.

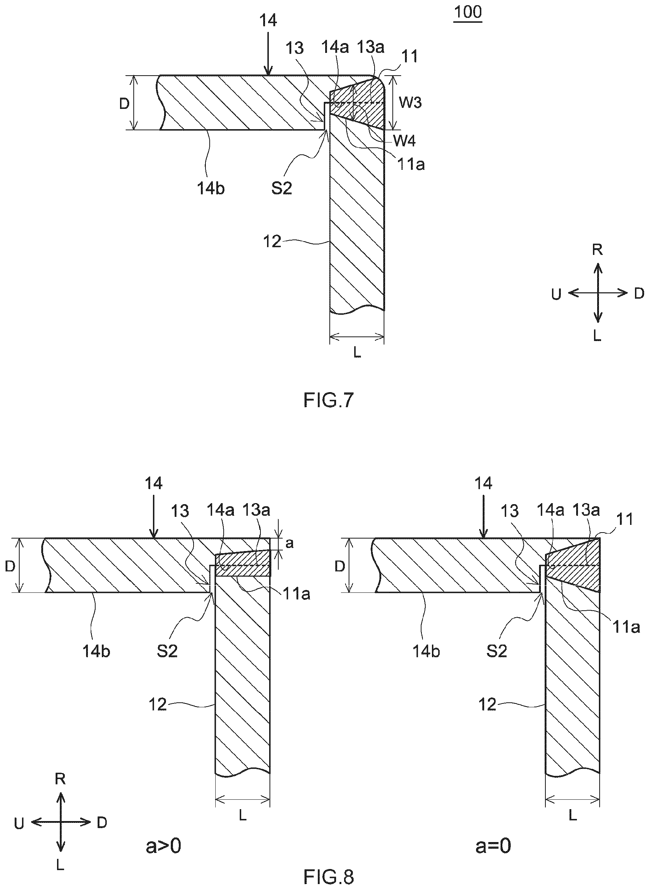

FIG. 6 is a cross-sectional view schematically illustrating a molten portion 11a at the side portion of the edge 13a of the opening 13 of the case body 12. FIG. 7 is a cross-sectional view schematically illustrating the molten portion 11a at the corner 11 of the edge 13a of the opening 13 of the case body 12. In each of FIGS. 6 and 7, the boundary between the case body 12 and the sealing plate 14 before the welding is indicated by a dashed line in the molten portion 11a.

As illustrated in FIG. 6, with the inserting portion 14b inserted into the interior of the case body 12, the molten portion 11a is formed over the entire periphery of the boundary between the edge 13a of the opening 13 of the case body 12 and the cover portion 14a of the sealing plate 14, thereby welding the edge 13a of the opening 13 and the cover portion 14a. Thus, the sealing plate 14 is mounted onto the case body 12, thereby sealing the opening 13. The gap S1 described above is formed between the opening 13 of the case body 12 and the inserting portion 14b of the sealing plate 14. The minimum distance between an end portion of the molten portion 11a on the sealing plate 14 side and the outer surface of the sealing plate 14 is denoted by "a".

As illustrated in FIG. 7, the molten portion 11a may reach the corner 11 of the battery case 10. As a result, an R can be formed at the corner 11 of the battery case 10. In the present embodiment, the boundary between the edge 13a of the opening 13 of the case body 12 and the cover portion 14a of the sealing plate 14 is irradiated with the laser along its entire periphery, with the inserting portion 14b inserted into the interior of the case body 12. In this case, the corner 11 of the battery case 10 receives more laser energy because the irradiation with the laser is applied along the circumferential direction at the edges 13a of the openings 13 of the case body 12. Because of this, the molten portion 11a tends to expand at the corner 11 than at the side portion of the edge. As a result of the molten portion 11a having become larger, the molten portion 11a can reach the corner of the battery case 10, in other words, the outer corner of the cover portion 14a of the sealing plate 14. When the molten portion 11a reaches the corner of the cover portion 14a of the sealing plate 14, the R is formed in an area located at the corner of the periphery of the battery case 10.

For example, in the square battery 100, the periphery of the battery case 10 may be covered with a resin shrink film, which is an insulating member. As described above, the R is formed at the area located at the corner of the periphery of the battery case 10, thereby making it possible to suitably prevent damage to the shrink film when the battery case 10 is covered with the shrink film. In this way, the output of the laser is desirably adjusted such that the molten portion 11a is appropriately formed over the entire periphery of the boundary between the edge 13a of the opening 13 of the case body 12 and the cover portion 14a of the sealing plate 14. In addition to the formation of an appropriate amount of the molten portion 11a at the boundary between the edge 13a of the opening 13 of the case body 12 and the cover portion 14a of the sealing plate 14, the molten portion 11a may be allowed to reach the corner of the cover portion 14a at the corner 11 of the edge 13a of the opening 13 of the case body 12. Note that it is desirable for the molten portion 11a to reach the corner of the cover portion 14a on its surface and spread to the extent that the R is formed at the corners of the cover portion 14a, but the molten portion 11a does not have to spread to the outer surface of the sealing plate 14. In this regard, the thickness of the cover portion 14a and the output of the laser are desirably adjusted such that the R is formed at the corners of the cover portion 14a by the laser irradiation.

FIG. 8 is a cross-sectional view schematically illustrating a preferred form of the molten portion 11a at the corner 11. As described above, from the viewpoint of preventing damage to the shrink film by forming the suitable R portion at the corner 11, the shorter the minimum distance a between the end portion of the molten portion 11a on the sealing plate 14 side at the surface of the corner 11 and the outer surface of the sealing plate 14 is, the better it is. The minimum distance a may be generally 5 mm or less and is preferably 3 mm or less, and more preferably 1 mm or less. The above distance may be 0 mm, and in this case it can be said that the R is formed up to the outer surface of the sealing plate 14.

As illustrated in FIG. 6, at the side portion of the edge 13a of the opening 13 of the case body 12, when an entire depth L of the case body 12 from a surface of the battery case 10 is set to 1, the width of the molten portion 11a at the surface of the battery case 10 is W1, and the width of the molten portion 11a at a position corresponding to a depth of 0.5 is W2. On the other hand, as illustrated in FIG. 7, at the corner 11 of the edge 13a of the opening 13 of the case body 12, when the entire depth L of the case body 12 from the surface of the battery case 10 is set to 1, the width of the molten portion 11a at the surface of the battery case 10 is W3, and the width of the molten portion 11a at a position corresponding to a depth of 0.5 is W4. It is desirable to set the welding conditions in advance through experiments or the like so as to satisfy the following relationship between W1 and W2.

As described above, the corner 11 receives more laser energy, whereby the width W3 of the molten portion 11a at the corner 11 tends to be larger than the width W1 of the molten portion 11a. In other words, the width W3 of the molten portion 11a depends on the width W1 of the molten portion 11a, and the width W3 of the molten portion 11a increases as the width W1 of the molten portion 11a increases. From the viewpoint of achieving the suitably R-shaped corner 11 by increasing the width W3 of the molten portion 11a, it is also preferable to have a larger value of the width W1 of the molten portion 11a. Furthermore, according to the inventor's findings, it is preferred that W1 > W2 is satisfied. The ratio (W2/W1) is preferably 0.8 or less, more preferably 0.75 or less, and even more preferably 0.7 or less. On the other hand, when the value of W2/W1 is extremely small, there is a risk of deterioration in welding quality. Therefore, the value of W2/W1 is preferably 0.3 or more, more preferably 0.4 or more, and even more preferably 0.5 or more.

According to the inventor's findings, it is desirable to have the ratio (W4/W3) smaller than the ratio (W2/W1). That is, it is desirable that a difference between the width of the molten portion 11a at the surface and the width of the molten portion 11a at a depth of 0.5 is larger at the corner 11 of the edge 13a of the opening 13 than at the side portion of the edge. Furthermore, according to the inventor's findings, it is preferred that W3 > W4 is satisfied, and the ratio (W4/W3) is preferably less than 0.80, more preferably 0.75 or less, and even more preferably 0.7 or less. On the other hand, when the value of W4/W3 is extremely small, there is a risk of deterioration in welding quality. Therefore, the value of W4/W3 is preferably 0.3 or more, more preferably 0.4 or more, and even more preferably 0.5 or more.

In the embodiment described above, the square battery includes the battery case and the electrode assembly housed in the battery case. The battery case includes the case body having a rectangular prism shape with the openings at both ends thereof and the sealing plate that seals the opening. The sealing plate has the cover portion that covers the edge of the opening of the case body and the inserting portion inserted into the interior of the case body along the inside of the opening of the case body. The cover portion and the case body are welded together along the edge of the opening of the case body.

Such a square battery can inhibit the laser from traveling into the interior of the battery case during welding, thereby preventing damage to the electrode assembly.

In the embodiment described above, damage to the shrink film can be prevented when the shrink film is used at the outer periphery of the battery case.

In the embodiment described above, by adjusting the ratio W2/W1 and the ratio W4/W3 within respective predetermined ranges, the battery case can be welded suitably while forming the R at the corners of the battery case.

**In** the embodiment described above, by adjusting the ratio W2/W1 within the predetermined range, the battery case can be welded suitably while forming the R at the corners of the battery case.

**In** the embodiment described above, by adjusting the ratio W4/W3 within the predetermined range, the battery case can be welded suitably while forming the R at the corners of the battery case.

**In** the embodiment described above, the welding heat, which might otherwise be concentrated at welded points during welding, can be diffused. This can prevent explosion of welded portions that could originate from the corners of the battery case.

**In** the embodiment described above, the heat of fusion generated from the molten portion during welding can be suitably diffused at the corners of the battery case where the laser energy is more likely to be concentrated. This can suitably prevent explosion of welded portions that could originate from the corners of the battery case.

**In** the embodiment described above, the manufacturing method for the square battery is a manufacturing method for a square battery that includes the case body having a rectangular prism shape with the openings at both ends thereof and the sealing plate that seals the opening. The sealing plate has the cover portion that covers the edge of the opening of the case body and the inserting portion inserted into the interior of the case body from the cover portion along the inside of the case body. The method includes the following steps of:
mounting the sealing plate onto the opening of the case body such that the cover portion covers the edge of the opening of the case body and the inserting portion is inserted into the interior of the case body; and
welding the case body and the sealing plate together by irradiation with a laser over an entire periphery of the opening of the case body at a boundary between the edge of the opening of the case body and the cover portion of the sealing plate opposed to the edge of the opening.

In the manufacturing method for the square battery described above, the laser can be inhibited from traveling into the interior of the battery case during welding, thereby preventing damage to the electrode assembly.

In the manufacturing method for the square battery described above, the laser can be inhibited from traveling into the interior of the battery case during welding, thereby preventing damage to the electrode assembly.

In the manufacturing method for the square battery described above, when a resin shrink film is used at the outer periphery of the battery case as the insulating member, damage to the shrink film can be prevented.

In the manufacturing method for the square battery described above, adjusting the ratio W2/W1 and the ratio W4/W3 within respective predetermined ranges allows for the manufacture of the square battery with the R formed at the corners of the battery case and with the battery case and the sealing plate suitably welded together.

In the manufacturing method for the square battery described above, adjusting the ratio W2/W1 within the predetermined range allows for the manufacture of the square battery with the R formed at the corners of the battery case and with the battery case and the sealing plate suitably welded together.

In the manufacturing method for the square battery described above, adjusting the ratio W4/W3 within the predetermined range allows for the manufacture of the square battery with the R formed at the corners of the battery case and with the battery case and the sealing plate suitably welded together.

In the manufacturing method for the square battery described above, the welding heat, which might otherwise be concentrated at welded points during welding, can be diffused. This can prevent explosion of welded portions that could originate from the corners of the battery case.

**In** the manufacturing method for the square battery described above, the heat of fusion generated from the molten portion during welding can be suitably diffused at the corners of the battery case where the laser energy is more likely to be concentrated. This can suitably prevent explosion of welded portions that could originate from the corners of the battery case.

The technology disclosed herein has been described above. Unless otherwise mentioned, the embodiments and the like described herein do not limit the present disclosure. The technology disclosed herein can be modified in various ways, and each component and each process mentioned herein can be omitted or combined as appropriate, as long as no special problems arise. The present specification also includes the disclosure set forth in each of the following items.

### Item 1:

A square battery, including:
a battery case; and
an electrode assembly housed in the battery case, wherein
the battery case includes:
   a case body having a rectangular prism shape with openings at both ends thereof; and
   a sealing plate that seals the opening,
   the sealing plate has:
      a cover portion covering an edge of the opening of the case body; and
      an inserting portion inserted into an interior of the case body along an inside of the opening of the case body, and
      the cover portion and the case body are welded together along the edge of the opening of the case body.

### Item 2:

The square battery according to Item 1, wherein
the battery case has an R formed on at least one corner thereof.

### Item 3:

The square battery according to Item 1 or 2, wherein
at a side portion of the edge of the opening of the case body, when a width of a molten portion at a surface of the case body is W1, an entire depth L of the case body from a surface of the battery case is set to 1, and a width of the molten portion at a position corresponding to a depth of 0.5 is W2, and
at a corner of the edge of the opening of the case body, when a width of the molten portion at the surface of the case body is W3, the entire depth L of the case body from the surface of the battery case is set to 1, and a width of the molten portion at a position corresponding to a depth of 0.5 is W4,
a ratio W2/W1 of the W2 to the W1 is larger than a ratio W4/W3 of the W4 to the W3.

### Item 4:

The square battery according to Item 3, wherein the ratio W2/W1 is 0.3 or more and 0.8 or less.

### Item 5:

The square battery according to Item 3, wherein the ratio W4/W3 is 0.3 or more and 0.8 or less.

### Item 6:

The square battery according to any one of Items 1 to 5, wherein a gap where the case body and the sealing plate are not welded is formed between the case body and the sealing plate.

### Item 7:

The square battery according to Item 6, wherein the gap at a side portion of the edge of the opening of the case body is smaller than the gap at a corner of the edge of the opening of the case body.

### Item 8:

A manufacturing method for a square battery, the square battery comprising:
a case body having a rectangular prism shape with openings at both ends thereof; and
a sealing plate that seals the opening, wherein
the sealing plate has:
   a cover portion covering an edge of the opening of the case body; and
   an inserting portion inserted into an interior of the case body from the cover portion along an inside of the opening of the case body, the manufacturing method comprising the steps of:
mounting the sealing plate onto the opening of the case body such that the cover portion covers the edge of the opening of the case body and the inserting portion is inserted into the interior of the case body; and
welding the case body and the sealing plate together by irradiation with a laser over an entire periphery of the opening of the case body at a boundary between the edge of the opening of the case body and the cover portion of the sealing plate opposed to the edge of the opening.

### Item 9:

The manufacturing method for a square battery according to Item 8, wherein in the welding step, the sealing plate is irradiated with the laser from a direction perpendicular to a thickness direction of the sealing plate.

### Item 10:

The manufacturing method for a square battery according to Item 8 or 9, wherein an R is formed on at least one corner of the battery case.

### Item 11:

The manufacturing method for a square battery according to any one of Items 8 to 10, wherein
at a side portion of the edge of the opening of the case body, when a width of a molten portion at a surface of the case body is W1, an entire depth L of the case body from a surface of the battery case is set to 1, and a width of the molten portion at a position corresponding to a depth of 0.5 is W2, and
at a corner of the edge of the opening of the case body, when a width of the molten portion at the surface of the case body is W3, the entire depth L of the case body from the surface of the battery case is set to 1, and a width of the molten portion at a position corresponding to a depth of 0.5 is W4,
the case body and the sealing plate are welded together such that a ratio W2/W1 of the W2 to the W1 is larger than a ratio W4/W3 of the W4 to the W3.

### Item 12:

The manufacturing method for a square battery according to Item 11, wherein the case body and the sealing plate are welded together such that the ratio W2/W1 is 0.3 or more and 0.8 or less.

### Item 13:

The manufacturing method for a square battery according to Item 11, wherein the case body and the sealing plate are welded together such that the ratio W4/W3 is 0.3 or more and 0.8 or less.

### Item 14:

The manufacturing method for a square battery according to any one of Items 8 to 13, wherein a gap where the case body and the sealing plate are not welded is formed between the case body and the sealing plate.

### Item 15:

The manufacturing method for a square battery according to Item 14, wherein the case body and the sealing plate are welded together such that the gap at a side portion of the edge of the opening of the case body is formed to be smaller than the gap at a corner of the edge of the opening of the case body.

### [Reference Signs List]

- 10: Battery case

- 11: Corner
- 11a: Molten portion
- 11c: Laser
- 12: Case Body
- 12a: Bottom surface
- 12b: Long side surface
- 12c: Top surface
- 12d: Weld joint
- 13: Opening
- 13a: Edge of opening
- 14: Sealing plate
- 14a: Cover portion
- 14b: Inserting portion
- 20: Electrode assembly
- 22: Positive electrode
- 22a: Positive electrode active material layer
- 22c: Positive electrode core
- 22t: Positive electrode tab
- 24: Negative electrode
- 24a: Negative electrode active material layer
- 24c: Negative electrode core
- 24t: Negative electrode tab
- 26: Separator
- 30: Positive electrode terminal
- 40: Negative electrode terminal
- 100: Square battery

## Claims

1. A square battery (100), comprising:
a battery case (10); and
an electrode assembly (20) housed in the battery case (10), wherein
the battery case (10) includes:
a case body (12) having a rectangular prism shape with openings (13) at both ends thereof; and
a sealing plate (14) that seals the opening (13),
the sealing plate (14) has:
a cover portion (14a) covering an edge (13a) of the opening (13) of the case body (12); and
an inserting portion (14b) inserted into an interior of the case body (12) along an inside of the opening (13) of the case body (12), and
the cover portion (14a) and the case body (12) are welded together along the edge (13a) of the opening (13) of the case body (12).

2. The square battery according to claim 1, wherein the battery case (10) has an R formed on at least one corner (11) thereof.

3. The square battery according to claim 1 or 2, wherein
at a side portion of the edge (13a) of the opening (13) of the case body (12), when a width of a molten portion (11a) at a surface of the case body (12) is W1, an entire depth L of the case body (12) from a surface of the battery case (10) is set to 1, and a width of the molten portion (11a) at a position corresponding to a depth of 0.5 is W2, and
at a corner (11) of the edge (13a) of the opening (13) of the case body (12), when a width of the molten portion (11a) at the surface of the case body (12) is W3, the entire depth L of the case body (12) from the surface of the battery case (10) is set to 1, and a width of the molten portion (11a) at a position corresponding to a depth of 0.5 is W4,
a ratio W2/W1 of the W2 to the W1 is larger than a ratio W4/W3 of the W4 to the W3.

4. The square battery according to claim 3, wherein the ratio W2/W1 is 0.3 or more and 0.8 or less.

5. The square battery according to claim 3 or 4, wherein the ratio W4/W3 is 0.3 or more and 0.8 or less.

6. The square battery according to any one of claim 1 to 5, wherein a gap where the case body (12) and the sealing plate (14) are not welded is formed between the case (12) body (12) and the sealing plate (14).

7. The square battery according to claim 6, wherein the gap at a side portion of the edge (13a) of the opening (13) of the case body (12) is smaller than the gap at a corner (11) of the edge (13a) of the opening (13) of the case body (12).

8. A manufacturing method for a square battery, the square battery comprising:
a case body (12) having a rectangular prism shape with openings (13) at both ends thereof; and
a sealing plate (14) that seals the opening (13), wherein
the sealing plate (14) has:
a cover portion (14a) covering an edge (13a) of the opening (13) of the case body (12); and
an inserting portion (14b) inserted into an interior of the case body (12) from the cover portion (14a) along an inside of the opening (13) of the case body (12), the manufacturing method comprising the steps of:
mounting the sealing plate (14) onto the opening (13) of the case body (12) such that the cover portion (14a) covers the edge (13a) of the opening (13) of the case body (12) and the inserting portion (14b) is inserted into the interior of the case body (12); and
welding the case body (12) and the sealing plate (14) together by irradiation with a laser over an entire periphery of the opening (13) of the case body (12) at a boundary between the edge (13a) of the opening (13) of the case body (12) and the cover portion (14a) of the sealing plate (14) opposed to the edge (13a) of the opening (13).

9. The manufacturing method for a square battery according to claim 8, wherein in the welding step, the sealing plate (14) is irradiated with the laser from a direction perpendicular to a thickness direction of the sealing plate (14).

10. The manufacturing method for a square battery according to claim 8 or 9, wherein an R is formed on at least one corner (11) of the battery case (10).

11. The manufacturing method for a square battery according to any one of claim 8 to 10, wherein
at a side portion of the edge (13a) of the opening (13) of the case body (12), when a width of a molten portion (11a) at a surface of the case body (12) is W1, an entire depth L t of the case body (12) from the surface of the battery case (10) is set to 1, and a width of the molten portion (11a) at a position corresponding to a depth of 0.5 is W2, and
at a corner (11) of the edge (13a) of the opening (13) of the case body (12), when a width of the molten portion (11a) at the surface of the case body (12) is W3, the entire depth L of the case body (12) from the surface of the battery case (10) is set to 1, and a width of the molten portion (11a) at a position corresponding to a depth of 0.5 is W4,
the case body (12) and the sealing plate (14) are welded together such that a ratio W2/W1 of the W2 to the W1 is larger than a ratio W4/W3 of the W4 to the W3.

12. The manufacturing method for a square battery according to claim 11, wherein the case body (12) and the sealing plate (14) are welded together such that the ratio W2/W1 is 0.3 or more and 0.8 or less.

13. The manufacturing method for a square battery according to claim 11 or 12, wherein the case body (12) and the sealing plate (14) are welded together such that the ratio W4/W3 is 0.3 or more and 0.8 or less.

14. The manufacturing method for a square battery according to any one of claim 8 to 13, wherein a gap where the case body (12) and the sealing plate (14) are not welded is formed between the case body (12) and the sealing plate (14).

15. The manufacturing method for a square battery according to claim 14, wherein the case body (12) and the sealing plate (14) are welded together such that the gap at a side portion of the edge (13a) of the opening (13) of the case body (12) is formed to be smaller than the gap at a corner (11) of the edge (13a) of the opening (13) of the case body (12).
